# EUROPÄISCHE PATENTANMELDUNG

(11) **EP 0 567 865 A2**
(43) Veröffentlichungstag der Anmeldung: **03.11.1993**
(21) Anmeldenummer: 93106202.0
(22) Anmeldetag: 16.04.1993
(51) Int. Cl.: F23D 14/66, F23L 15/04, F23D 14/22

(54) **Rekuperationsbrenner für einen Ofen**

(30) Priorität: 25.04.1992 DE 4213701
(71) Anmelder: HEIMSOTH VERWALTUNGEN GmbH & CO. KG Beteiligungsgesellschaft, D-31134 Hildesheim (DE)
(72) Erfinder: Weber, Hartmut, D-31134 Hildesheim (DE); Bittner, Hans-Georg, Dr., D-31177 Harsum (DE)
(74) Vertreter: DIEHL GLAESER HILTL & PARTNER

(57) **Zusammenfassung**

Rekuperationsbrenner mit einem Brennerrohr (1), das einen Brennerkopf (4) umgibt, einer zum Brennerkopf (4) führenden Gaslanze (8), die im Verdrängerrohr (5) angeordnet ist, einem das Verdrängerrohr (5) umgebenden, mit Außen- und Innenrippen versehenen rohrförmigen Rekuperator (7) für die Vorwärmung der Verbrennungsluft durch das heiße Abgas und mit einem das Rekuperatorrohr (7) umgebenden Gehäuse (3). Das Brennerrohr (1) besteht aus keramischem Werkstoff und der Brennerkopf (4) aus metallischem oder keramischem Werkstoff, insbesondere Siliziumkarbid. Das Brennerrohr (1) ist an einem Keramikkonus (2) im Bereich dessen kleinerer Radialerstreckung abgedichtet gehaltert. Der Keramikkonus (2) ist im Bereich seiner größeren Radialerstreckung mit dem Rekuperatorrohr (7) verbunden und das den Rekuperator (7) umgebende Gehäuse (3) ist wenigstens zum Teil aus Keramikwerkstoff gebildet.

## Beschreibung

Die Erfindung bezieht sich auf einen Rekuperationsbrenner mit einem Brennerrohr, das einen Brennerkopf umgibt, einer zum Brennerkopf führenden Gaslanze, die im Verdrängerrohr angeordnet ist, einem das Verdrängerrohr umgebenden, mit Außen- und Innenrippen versehenen rohrförmigen Rekuperator für die Vorwärmung der Verbrennungsluft durch das heiße Abgas und mit einem das Rekuperatorrohr umgebenden Gehäuse.

Es ist ein Industriegasbrenner der vorgenannten Art bekannt (DE OS 3 909 339), allerdings ist dieser auf Temperaturen unterhalb von 1300 K in seinem Einsatzbereich begrenzt. Dies ist nicht allein darauf zurückzuführen, daß die verwendeten Materialien keine höheren Temperaturen zulassen, sondern auch auf die Ausgestaltung im Bereich der Halterung des Brennerrohres sowie Brennerkopfes.

Bei einem anderen bekannten Industriebrenner (DE-C2-29 48 048) der eingangs genannten Art ist jedoch das Rekuperatorrohr nicht abgedichtet an dem Brennerrohr befestigt, sondern dort ist ein Ringspalt vorgesehen, damit verhältnismäßig kühle Verbrennungsluft (im Verhältnis zu den Flammengasen) nach außen gelangen kann, um das Brennerrohr und dieses umgebende Teile auf die zugelassene Betriebstemperatur abzukühlen. Dadurch wird jedoch der Grad der erreichbaren Vorwärmung nachhaltig herabgesetzt.

Der Erfindung liegt die Aufgabe zugrunde, einen Rekuperatorbrenner mit hoher Luftvorwärmung für einen Ofen zu schaffen, der bei Ofentemperaturen bis zu 1800 K einsetzbar ist.

Erreicht wird dies durch einen Rekuperatorbrenner, der dadurch gekennzeichnet ist, daß das Brennerrohr aus keramischem Werkstoff und der Brennerkopf aus metallischem oder keramischem Werkstoff, insbesondere Siliziumkarbid gebildet sind, das Brennerrohr an einem Keramikkonus im Bereich dessen kleinerer Radialerstreckung dicht gehaltert ist, der Keramikkonus im Bereich seiner größeren Radialerstreckung mit dem Rekuperatorrohr dicht verbunden ist und daß das den Rekuperator umgebende Gehäuse wenigstens zum Teil aus Keramikwerkstoff gebildet ist.

Für die Erfindung ist nicht allein der Einsatz von Keramikwerkstoffen für den Brennerkopf, für das Brennerrohr und einen Teil des Gehäuses ausschlaggebend, sondern auch das Vorsehen eines im wesentlichen kegelförmigen Teiles, welches die Verbindung zwischen Brennerrohr und dem Rekuperatorrohr herstellt. Auf diese Art und Weise kann die Verbrennungsluft in einem Rohr außerhalb des Verdrängerrohres, jedoch innerhalb des Rekuperatorrohres über den Konus in das Brennerrohr gelangen, wobei die Verbrennungsluft im Bereich des Rekuperatorrohres auf Temperaturen von 1300 bis 1400 K vorgewärmt werden kann.

Der Rekuperator selbst wird in einen Anschlag hineingedrückt und in dieser Lage durch ein federndes Dichtelement gehalten, insbesondere einen Kompensator, der am abgasseitigen Ende des Rekuperatorbrenners angeordnet ist. Selbstverständlich können auch die einzelnen Teile des Wärmetauschers durch Dichtungen gegeneinander abgedichtet werden, andererseits kann die Verbindung des Keramikkonus mit dem - möglicherweise mehrteilig ausgebildeten - Rekuperatorrohr auch so erfolgen, daß dort eine permanente stoffschlüssige Verbindung hergestellt wird.

Als besonders vorteilhaft erweist sich die Anordnung der einzelnen Teile des Rekuperatorbrenners gemäß der Erfindung, als alle Teile des Brennerkopfes, des Brennerrohres sowie des Rekuperators nach hinten aus- bzw. eingebaut werden können, so daß der Ofenbetrieb selbst in keiner Weise gestört wird, wenn an einem Brenner Montagearbeiten durchgeführt werden. Zusätzlich läßt sich hierbei auch eine Modulbauweise realisieren, so daß eine Brennereinheit separat von einer Wärmetauschereinheit montierbar ist.

Der Gasluftmischer sowie die Gaslanze bei dem Rekuperationsbrenner gemäß der Erfindung können sowohl metallisch als auch keramisch sein, sie können auch aus einem Verbundwerkstoff hergestellt werden. In jedem Falle geht es um eine hohe Wärmebeständigkeit der verwendeten Materialien, damit eine hohe Vorwärmungstemperatur der Verbrennungsluft erreicht werden kann. Bei dem Rekuperationsbrenner können Ofentemperaturen um 1800 K erreicht werden, wobei die Luftvorwärmung 1300 bis 1400 K beträgt. Allein diese hohen Temperaturen machen deutlich, daß die Verwendung von Stahl als Baustoff für die wesentlichen Teile des Rekuperationsbrenners nicht mehr in Frage kommt.

Im Brenner gemäß der Erfindung herrscht permanent und überall ein hoher Druck, so daß man - im Vergleich zu dem bekannten Industriebrenner - hier von einem Hochdruckbrenner sprechen kann.

Der verwendete Brenner kann direkt gezündet werden und auch direkt überwacht werden, es können keramische Elektroden eingesetzt werden. Außerdem kann die Flammenüberwachung, z.B. als Ionisation über keramische Elektroden, erfolgen, wobei ein Abbrennen der Elektroden verhindert werden kann.

Aufgrund der Verwendung eines keramischen Materials ergibt sich für den Rekuperationsbrenner gemäß der Erfindung, daß dieser äußerst korrosionsbeständig ist, da die in Frage kommenden Keramikwerkstoffe eine sehr gute Korrosionsfestigkeit aufweisen.

Bei dem Brenner gemäß der Erfindung kann über einen Injektor auf der Abgasseite der Ofenraumdruck und damit das Kapazitätsstromverhältnis für die Verbrennung geregelt werden. Der Brenner kann sowohl im Lambdabereich als auch im Leistungsbereich kontinuierlich geregelt werden.

Der Rekuperatorbrenner gemäß der Erfindung kann durch eine einfache Maßnahme auch in einer Strahlrohrbeheizung eingesetzt werden. In diesem Falle müßte beispielsweise das Keramikgehäuse, das wenigstens den vorderen Teil des Rekuperators umgibt, gemäß der Erfindung mit einem geschlossenen, keramischen Strahlrohr verlängert werden.

Weiterhin ist es möglich, bei dem Rekuperationsbrenner mit einer stufenweisen Zuführung der Verbrennungsluft zu arbeiten. Die Stufung geschieht dadurch, daß mit dem Mischer eine erste Verbrennungsstufe verbunden ist und eine zweite Stufe darüber gelegt wird. Dies bedeutet, daß einzelne Teile des Rekuperationsbrenners nicht für sich hergestellt werden müssen, sondern aus einem einzigen Stück bestehen und als solches vor Ort installiert werden können. Insbesondere können diese Teile aus Keramik bestehen.

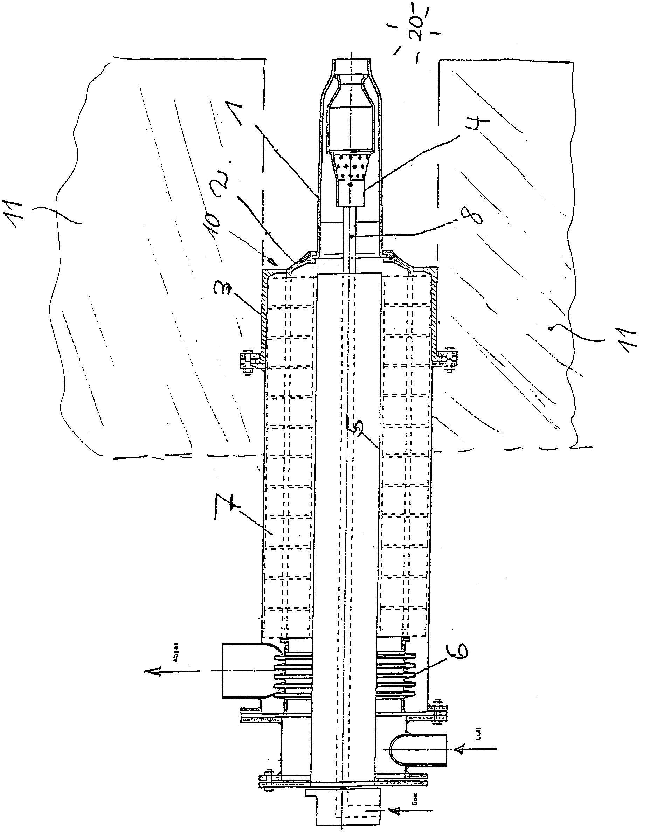

Die Erfindung wird nachstehend anhand der Zeichnung beispielsweise erläutert.

Die einzige Figur der Zeichnung zeigt einen Längsschnitt durch einen Rekuperatorbrenner gemäß der Erfindung.

In der Zeichnung ist beispielhaft der Aufbau des Rekuperationsbrenners in der Einbaulage im Ofen dargestellt.

Zur Orientierung ist die Ofenwand mit 11 und der Ofenraum selbst mit 20 bezeichnet worden.

Mit 1 ist ein Brennerrohr aus Keramik bezeichnet, welches mit seinem einen Ende innerhalb einer Ringnut eines Keramikkonus 2 dicht angeordnet ist. Der Keramikkonus 2 wiederum ist mit seinem äußeren im wesentlichen zylindrischen Teil mit einem zylindrischen Rohr eines Rekuperators 7 dicht verbunden. Das Rekuperatorrohr ist mit Innen- sowie mit Außenrippen ausgestattet.

Im Inneren des Rekuperatorrohres 7 befindet sich ein Verdrängerrohr 5. Der Brennerkopf 4 ist am ofenseitigen Ende mit einer Gaslanze 8 verbunden, die im Verdrängerrohr angeordnet ist.

Mit 6 ist ein Kompensator bezeichnet, welcher dafür sorgt, daß der Rekuperator 7 ständig fixiert und vorgespannt wird. Der Rekuperator 7 wird in dieser Vorspannung durch einen Vorsprung 10 gehaltert, der mit den äußeren Rippen des Rekuperators zusammenwirkt. Dieser Vorsprung ist an dem Gehäuseteil 3 ausgebildet, das den Rekuperator umgibt.

In der Zeichnung sind mit Pfeilen der Weg des Gases, der Luft bzw. der Verbrennungsluft sowie des Abgases bezeichnet, so daß die Funktion des Rekuperatorbrenners gemäß der Erfindung leicht zu erkennen ist.

Es ist aus der Zeichnung ebenfalls zu erkennen, daß praktisch alle Teile nach links, d.h. von außerhalb des Ofens montiert bzw. demontiert werden können.

## Patentansprüche

1. Rekuperationsbrenner mit einem Brennerrohr (1), das einen Brennerkopf (4) umgibt, einer zum Brennerkopf (4) führenden Gaslanze (8), die im Verdrängerrohr (5) angeordnet ist, einen das Verdrängerrohr (5) umgebenden, mit Außen- und Innenrippen versehenen rohrförmigen Rekuperator (7) für die Vorwärmung der Verbrennungsluft durch das heiße Abgas und mit einem das Rekuperatorrohr (7) umgebenden Gehäuse (3), dadurch gekennzeichnet, daß das Brennerrohr (1) aus keramischem Werkstoff und der Brennerkopf (4) aus metallischem oder keramischem Werkstoff, insbesondere Siliziumkarbid gebildet sind, das Brennerrohr (1) an einem Keramikkonus (2) im Bereich dessen kleinerer Radialerstreckung dicht gehaltert ist, der Keramikkonus (2) im Bereich seiner größeren Radialerstreckung mit dem Rekuperatorrohr (7) dicht verbunden ist und daß das den Rekuperator (7) umgebende Gehäuse (3) wenigstens zum Teil aus Keramikwerkstoff gebildet ist.

2. Brenner nach Anspruch 1, dadurch gekennzeichnet, daß der Rekuperator (7) nach vorn hin an einem Innenanschlag (10) des Gehäuses (3) anliegt und von hinten her über ein federndes, dichtendes Element, insbesondere einen Kompensator (6), in diese Lage vorgespannt gehaltert ist.
